(19) **Europäisches Patentamt / European Patent Office / Office européen des brevets**

(11) **EP 4 266 410 A1**

(12) # EUROPEAN PATENT APPLICATION
published in accordance with Art. 153(4) EPC

(43) Date of publication:
**25.10.2023 Bulletin 2023/43**

(21) Application number: **21911455.0**

(22) Date of filing: **20.12.2021**

(51) International Patent Classification (IPC):
$H01M\ 4/36$ (2006.01)   $H01M\ 4/62$ (2006.01)
$H01M\ 4/525$ (2010.01)   $H01M\ 4/505$ (2010.01)
$C01G\ 53/00$ (2006.01)   $H01M\ 10/052$ (2010.01)

(52) Cooperative Patent Classification (CPC):
$C01G\ 53/00$; $H01M\ 4/36$; $H01M\ 4/505$;
$H01M\ 4/525$; $H01M\ 4/62$; $H01M\ 10/052$;
Y02E 60/10

(86) International application number:
**PCT/KR2021/019443**

(87) International publication number:
**WO 2022/139388 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020 KR 20200179806**

(71) Applicants:
• **POSCO Holdings Inc.**
  **Seoul 06194 (KR)**
• **RESEARCH INSTITUTE OF INDUSTRIAL
  SCIENCE &
  TECHNOLOGY
  Pohang-si, Gyeongsangbuk-do 37673 (KR)**
• **POSCO Chemical Co., Ltd
  Gyeongsangbuk-do 37918 (KR)**

(72) Inventors:
• **KWON, Ohmin**
  **Incheon 22018 (KR)**
• **CHOI, Kwon Young**
  **Seoul 07987 (KR)**
• **LEE, Sanghyuk**
  **Incheon 22405 (KR)**
• **SONG, Jung Hoon**
  **Gwacheon-si, Gyeonggi-do 13835 (KR)**
• **PARK, Jong Il**
  **Pohang-si, Gyeongsangbuk-do 37673 (KR)**
• **NAM, Sang Cheol**
  **Seoul 02587 (KR)**
• **PARK, Inchul**
  **Incheon 22008 (KR)**
• **HWANGBO, Geun**
  **Incheon 21670 (KR)**

(74) Representative: **Potter Clarkson
  Chapel Quarter
  Mount Street
  Nottingham NG1 6HQ (GB)**

(54) **POSITIVE ELECTRODE ACTIVE MATERIAL, METHOD FOR PRODUCING SAME, AND LITHIUM ION BATTERY INCLUDING SAME**

(57)   The present invention provides a positive electrode active material, its manufacturing method and a lithium secondary battery containing the same. The positive electrode active material for a lithium secondary battery of the present invention is a positive electrode active material for lithium secondary battery, comprising: a lithium metal oxide particle; and a coating layer positioned on at least part of the lithium metal oxide particle surface; wherein, the coating layer includes any one or more of group 5 elements and group 6 elements, B, LiOH, $Li_2CO_3$ and $Li_2SO_4$.

【FIG 1】

**Description**

**Field of the Invention**

The present invention relates to a positive electrode active material, its manufacturing method and a lithium secondary battery containing the same. More specifically, it is related to a positive electrode active material for lithium secondary battery, comprising: a lithium metal oxide particle; and a coating layer positioned on at least part of the lithium metal oxide particle surface; wherein, the coating layer includes any one or more of group 5 elements and group 6 elements, B, LiOH, $Li_2CO_3$ and $Li_2SO_4$, and a method of preparing it, and lithium secondary battery including it.

**Description of the Related Art**

Recently, there is an explosive increase in demand for IT mobile devices and small electric power devices (e-bikes, small EVs, etc.), and there is a demand for electric vehicles with a driving distance of 400 km or more. Accordingly, the development of secondary batteries having high-capacity and a high energy density to drive them is being actively conducted worldwide.

In order to manufacture such a high-capacity battery, it is necessary to use a high-capacity positive electrode active material. Among the existing layered positive electrode active materials, the highest capacity material is $LiNiO_2$ (275mAh/g). However, structural collapse occurs easily during charging and discharging, and thermal stability due to oxidation number problem is low, making it difficult to commercially available.

In order to solve this problem, a NCM-based positive electrode active material with improved electrochemical stability was developed by substituting a heterogeneous transition metal (Co, Mn, etc.) at the Ni site.

**SUMMARY OF THE INVENTION**

The present invention relates to a positive electrode active material, its manufacturing method and a lithium secondary battery containing the same. More specifically, it is related to a positive electrode active material for lithium secondary battery, comprising: a lithium metal oxide particle; and a coating layer positioned on at least part of the lithium metal oxide particle surface; wherein, the coating layer includes any one or more of group 5 elements and group 6 elements, B, LiOH, $Li_2CO_3$ and $Li_2SO_4$, and a method of preparing it, and lithium secondary battery including it.

An exemplary embodiment is related to a positive electrode active material for lithium secondary battery, comprising: a lithium metal oxide particle; and a coating layer positioned on at least part of the lithium metal oxide particle surface; wherein, the coating layer includes any one or more of group 5 elements and group 6 elements, B, LiOH, $Li_2CO_3$ and $Li_2SO_4$.

The positive electrode active material is in the form of a secondary particle including a plurality of primary particles, and one or more of the Group 5 and Group 6 elements is positioned on at least a portion of the primary particle surface.

The Group 5 element includes Nb.

The Group 6 elements include W.

A content of the group 5 element and group 6 element is 10ppm to 10,000ppm based on the total amount of the positive electrode active material.

A content of the LiOH is 100ppm to 10,000ppm based on the total amount of the positive electrode active material.

A content of the $Li_2SO_4$ is 10ppm to 3,000ppm based on the total amount of the positive electrode active material.

The $Li_2CO_3$ is not separately injected as a lithium raw material, but is caused by an internal reaction.

The positive electrode active material has a peak around 192.1 eV and a peak around 195.0 eV, and a peak around 35.0 eV and a peak around 38.5 eV when analyzed by XPS.

In the positive electrode active material, during EDS analysis, the ratio of a relative intensities of Ni and W present at the boundary of the primary particle satisfies the following equation 1.

[Equation 1]

$$0.1 \leq [I_{Ni}/I_W] \leq 2.0$$

(Here, $I_{Ni}$ means a relative intensity of Ni present at the boundary of the primary particle, and Iw means a relative intensity of W present at the boundary of the primary particle.)

A content of nickel in the metal in the lithium metal oxide particle is 85 mol% or more.

Another exemplary embodiment is related to a manufacturing method of positive electrode active material for lithium secondary battery, comprising:

Obtaining a metal precursor by injecting an aqueous metal salt solution into a co-precipitation reactor; preparing a mixture by mixing the metal precursor, a lithium raw material and a doping raw material; cooling after a first heat treatment of the mixture; containing at least one of a group 5 element and a group 6 element; and subjecting the product to a secondary heat treatment, after drying the washed product, and mixing it with a material for forming a coating layer, wherein, the coating layer forming material includes a boron compound, LiOH and $Li_2SO_4$.

In the step of washing, a material containing the Group 5 element is a mixture of at least one of:

distilled water and at least one of alcohol; and ammonium niobium oxalate, niobium oxide, niobium nitride, niobium boride, niobium pentaethoxide, niobium i-propoxide, niobium n-propoxide propoxide), niobium i-butoxide, niobium n-butoxide, niobium halide and niobium nitrate.

In the step of washing, a material containing the Group 6 element is a mixture of at least one of:

distilled water and at least one of alcohol; and ammonium meta-tungstate (AMT), ammonium para-tungstate, tungsten oxide, tungsten halide, tungsten hexaethoxide, tungsten i-propoxide, tungsten boride, tungsten nitride, and tungsten carbonyl.

The secondary heat treatment is performed in the 200 to 450°C temperature range.

Another exemplary embodiment is related to a lithium secondary battery, comprising: a positive electrode comprising the positive electrode active material of the embodiment; a negative electrode; and a non-aqueous electrolyte.

The positive electrode active material according to an exemplary embodiment may include all group 5 or group 6 elements such as W and Nb and B, LiOH, $Li_2CO_3$ and $Li_2SO_4$ in the coating layer. Due to this, it is possible to secure the high-capacity of the positive electrode active material. In addition, it has excellent high temperature cycle-life characteristics and can significantly reduce initial resistance and resistance increase rate.

## BRIEF DESCRIPTION OF THE DRAWINGS

FIG 1 is a TEM/EDS analysis picture of exemplary embodiment 1 positive electrode active material.

FIG 2 is a Cross-sectional EDS line profile image of exemplary embodiment 1 positive electrode active material.

FIG 3 shows XPS analysis of exemplary embodiment 1 positive electrode active material.

FIG 4 shows a change in discharge capacity according to W content in exemplary embodiment 1 and exemplary embodiment 2-1 to 2-6.

FIG. 5 shows the DC-IR change according to the W content of exemplary embodiment 1 and exemplary embodiment 2-1 to 2-6.

FIG. 6 shows a change in the DCIR increase rate according to the W content in exemplary embodiment 1 and exemplary embodiment 2-1 to 2-6.

FIG 7 shows the initial discharge capacity according to the LiOH content of exemplary embodiment 1 and exemplary embodiment 4-1 to 4-4.

FIG 8 shows the change in discharge capacity according to the $Li_2SO_4$ content of exemplary embodiment 1 and exemplary embodiment 3-1 to 3-5.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

The term "including/comprising" as used herein concretely indicates specific characteristics, regions, integer numbers, steps, operations, elements, and/or components, and is not to exclude presence or addition of other specific characteristics, regions, integer numbers, steps, operations, elements, and/or components.

Terminologies as used herein are to mention only a specific exemplary embodiment, and are not to limit the present invention. Singular forms used herein include plural forms as long as phrases do not clearly indicate an opposite meaning. The term "including/comprising" as used herein concretely indicates specific characteristics, regions, integer numbers, steps, operations, elements, and/or components, and is not to exclude presence or addition of other specific characteristics, regions, integer numbers, steps, operations, elements, and/or components.

In this specification, the term "combination thereof" included in the expression of the Markush form means one or more mixture or combination selected from the group consisting of the constituent elements described in the expression of the Markush form, and includes one or more selected from the group consisting of the constituent elements.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

In this specification, unless otherwise noted, % means wt%, and 1ppm means 0.0001 wt%.

Hereinafter, an exemplary embodiment will be described in detail so that a person of an ordinary skill can easily practice it in the technical field to which the present invention belongs. As those skilled in the art would realize, the described embodiments may be modified in various different ways, all without departing from the spirit or scope of the present invention.

An exemplary embodiment is related to a positive electrode active material for lithium secondary battery, comprising: a lithium metal oxide particle; and a coating layer positioned on at least part of the lithium metal oxide particle surface; wherein, the coating layer includes any one or more of group 5 elements and group 6 elements, B, LiOH, $Li_2CO_3$ and $Li_2SO_4$.

More specifically, the lithium metal oxide particle may have a layered structure, and since a coating layer containing at least one of group 5 and group 6 elements, B, LiOH, $Li_2CO_3$ and $Li_2SO_4$ is positioned on the surface of the particle, the resistance of the surface of the positive electrode active material can be reduced. Accordingly, it is possible to increase capacity and simultaneously improve cycle-life characteristics at high temperature. In addition, there is a merit that can significantly reduce the initial resistance and resistance increase rate at high temperature.

More specifically, any one or more of the group 5 and group 6 elements may be coated with a primary wet coating, and B, LiOH, $Li_2CO_3$ and $Li_2SO_4$ may be coated with a secondary dry coating.

That is, the positive electrode active material according to an exemplary embodiment is in the form of a secondary particle including a plurality of primary particles, and at least one of the group 5 and group 6 elements may be positioned on at least a part of the surface of the primary particle. In this case, the group 5 element may be Nb. Also, the Group 6 element may be W.

Meanwhile, the positive electrode active material of the present embodiment may exhibit a synergistic effect because the coating layer includes at least five elements or compounds as described above.

In the present embodiment, the content of the group 5 element and the group 6 element may range from 10 ppm to 10,000 ppm, more specifically from 30 ppm to 5,000 ppm, more specifically from 80 ppm to 2,000 ppm, and more specifically from 300 ppm to 800 ppm based on the total amount of the positive electrode active material. If the content of Group 5 and Group 6 elements is too small, there is a drawback that the resistance increase rate increases, and if there are too many, there is a drawback that the cell cycle-life decreases.

In the present embodiment, the content of the B may range from 10 ppm to 3,000 ppm, more specifically from 50 ppm to 2,000 ppm, more specifically from 100 ppm to 1,000 ppm, and more specifically from 300 ppm to 800 ppm based on the total amount of the positive electrode active material. If the content of B satisfies the range, since the average grain size can be reduced during sintering of the positive electrode active material, the initial resistance of the positive electrode active material and the resistance increase rate at high temperature can be significantly reduced.

The content of the LiOH may range from 100 ppm to 10,000 ppm, more specifically from 500 ppm to 7,000 ppm, and more specifically from 1,200 ppm to 3,000 ppm based on the total amount of the positive electrode active material. When the content of LiOH included in the coating layer satisfies the range, it is possible to secure high capacity and simultaneously improve cycle-life characteristics.

The content of the $Li_2CO_3$ may range from 1,000ppm to 5,000ppm, more specifically from 1,500ppm to 4,000ppm, and more specifically from 2,000ppm to 3,500ppm based on the total amount of the positive electrode active material. When the content of $Li_2CO_3$ satisfies the range, excellent room temperature and high temperature cycle-life characteristics can be improved, and resistance increase rate and average leakage current value can be reduced. At this time, the $Li_2CO_3$ is a compound resulting from the reaction between metal raw materials for forming lithium metal oxide and other coating layer forming raw materials without inputting a separate coating layer forming raw material.

The content of the $Li_2SO_4$ may range from 10ppm to 10,000ppm, more specifically from 80ppm to 3,000ppm, more specifically from 100ppm to 2,000ppm, more specifically from 100ppm to 800ppm, more specifically from 100ppm to 400ppm, based on the total amount of the positive electrode active material. When the content of $Li_2SO_4$ satisfies the range, it is possible to secure excellent capacity characteristics, simultaneously improve cycle-life characteristics, and reduce initial resistance values.

As such, since the positive electrode active material of the present exemplary embodiment includes at least one of group 5 and group 6 elements, B, LiOH, $Li_2CO_3$ and $Li_2SO_4$ in the coating layer, the lithium secondary battery to which it is applied exhibits excellent discharge capacity and simultaneously, improved initial temperature, excellent room temperature and high cycle-life characteristics. In addition, the initial resistance and resistance increase rate can be significantly reduced.

This effect is obtained when at least one of the group 5 and group 6 elements, B, LiOH, $Li_2CO_3$ and $Li_2SO_4$ are included, and if at least one of these elements is not included, desired properties cannot be obtained.

Meanwhile, during XPS analysis of the positive electrode active material of an exemplary embodiment, a peak around 192.1 eV and a peak around 195.0 eV may exist, and a peak around 35.0 eV and a peak around 38.5 eV may exist.

Meanwhile, during EDS analysis of the positive electrode active material of an exemplary embodiment, the ratio of relative intensities of Ni and W existing at the boundary of the primary particle may satisfy Equation 1 below.

[Equation 1]

$$0.1 \leq [I_{Ni}/I_W] \leq 2.0$$

(Here, $I_{Ni}$ means a relative intensity of Ni present at the boundary of the primary particle, and $I_W$ means a relative intensity of W present at the boundary of the primary particle.)

More specifically, the lower limit of Equation 1 may be 0.2, or 0.4, and the upper limit may be 1.5, 1.0, or 0.8.

Meanwhile, in the present exemplary embodiment, the content of nickel in the metal in the lithium metal oxide may be 85 mol% or more, more specifically 88 mol% or 90 mol% or more.

As in the present embodiment, when the content of nickel among metals in lithium metal oxide is 80% or more, a positive electrode active material having a high power characteristic can be implemented. Since the positive electrode active material of the present exemplary embodiment having such a composition has a high energy density per volume, the capacity of a battery to which it is applied can be improved, and is also suitable for use in an electric vehicle.

Another exemplary embodiment is related to a manufacturing method of positive electrode active material for lithium secondary battery, comprising:

Obtaining a metal precursor by injecting an aqueous metal salt solution into a co-precipitation reactor; preparing a mixture by mixing the metal precursor, a lithium raw material and a doping raw material; cooling after a first heat treatment of the mixture; containing at least one of a group 5 element and a group 6 element; and subjecting the product to a secondary heat treatment, after drying the washed product, and mixing it with a material for forming a coating layer, wherein, the coating layer forming material includes a boron compound, LiOH and $Li_2SO_4$.

First, a step of obtaining a metal precursor by injecting an aqueous metal salt solution into a co-precipitation reactor is performed.

More specifically, metal precursors constituting lithium metal oxide, for example, nickel raw material, cobalt raw material, manganese raw material, etc., are mixed with distilled water to prepare a metal salt aqueous solution, and then put into a reactor to perform a co-precipitation process. A metal precursor can be obtained.

Next, a step of preparing a mixture by mixing the metal precursor, lithium raw material and doping raw material is performed.

The lithium metal oxide of the present embodiment may be doped with Al or the like as an element. At this time, lithium metal oxide can be manufactured by introducing a doping material such that the content of the doping element is included in the range of 3,000 ppm to 4,000 ppm for Zr and 200 ppm to 350 ppm for Al based on the total amount of the lithium metal oxide.

Zr serves as a kind of pillar because Zr ions occupy Li sites, and stabilizes the layered structure by alleviating contraction of the lithium ion path during charging and discharging. Also, Al can stabilize the layered structure of the positive electrode active material. Therefore, the cycle-life characteristics of the lithium secondary battery can be further improved. Therefore, by including such a doping element, cycle-life characteristics of a lithium secondary battery to which the positive electrode active material of the present embodiment is applied can be further improved.

Thereafter, the mixture is subjected to a first heat treatment and then a cooling step is performed.

The primary heat treatment may be performed, for example, in the range of 700 degrees to 850 degrees. The duration of the first heat treatment may range from 3 hours to 40 hours. When the first heat treatment condition satisfies the range, the sum of LiOH and $Li_2CO_3$, which are residual lithium on the positive electrode surface, is less than 10000ppm, and the crystal grain size ranges from 80nm to 210nm, so a lithium secondary battery with excellent cycle-life and resistance characteristics and excellent thermal stability can be implemented.

After heat treatment as described above, a step of cooling the sintered body is performed. Specifically, the cooling step may be performed by a conventional method.

Next, a step of washing the product generated in the cooling step with water containing at least one of a group 5 element and a group 6 element is performed.

The water washing is for removing residual lithium from the surface, and the reason for washing with a material containing any one or more of group 5 elements and group 6 elements is to wet-coat at least part of the surface of the primary particle or the surface of the secondary particle with any one or more of group 5 elements and group 6 elements. In this case, the group 5 element and the group 6 element may be W or Nb. As the coating layer is formed by the wet coating method, not only the secondary particles but also the primary particles can be uniformly coated, thereby significantly reducing the resistance increase rate.

In the step of washing, a material containing W is a mixture of at least one of:
distilled water and at least one of alcohol; and ammonium meta-tungstate (AMT), ammonium para-tungstate, tungsten oxide, tungsten halide, tungsten hexaethoxide, tungsten i-propoxide, tungsten boride, tungsten nitride, and tungsten carbonyl. The concentration of the material containing W may be 0.0001 M to 0.1M, more specifically 0.001M to 0.005M. If the concentration of the material containing W is too low, there is a drawback that the resistance increase rate is high, and if it is too high, there is a drawback that the cycle-life characteristic is deteriorated.

In the step of washing, a material containing Nb is a mixture of at least one of:
distilled water and at least one of alcohol; and ammonium niobium oxalate, niobium oxide, niobium nitride, niobium boride, niobium pentaethoxide, niobium i-propoxide, niobium n-propoxide propoxide, niobium i-butoxide, niobium n-butoxide, niobium halide and niobium nitrate. The concentration of the material containing Nb may be 0.001M to 0.5M, more specifically 0.01M to 0.2M, more specifically 0.025M to 0.1M, and more specifically 0.025M to 0.045M. If the concentration of the material containing Nb is too small, there is a drawback that the resistance increase rate is high, and if it is too high, there is a drawback that the cycle-life characteristic is deteriorated.

Next, after drying the washed product, a secondary heat treatment step is performed by mixing it with a material for forming a coating layer.

The drying step is to remove moisture from the surface of the positive electrode active material that has been washed with water. This drying may be performed by a conventional method.

The secondary heat treatment can be performed in the temperature range of 200 to 450 °C, and the heat treatment time can range from 1 to 12 hr. This is an appropriate temperature and time range that does not compromise the high temperature cycle-life characteristic. If the secondary heat treatment process satisfies these conditions, a coating layer containing all of B, LiOH, $Li_2CO_3$ and $Li_2SO_4$, any one or more of group 5 elements and group 6 elements is formed.

In the prepared positive electrode active material, each content range of at least one of a group 5 element and a group 6 element, B, LiOH, $Li_2CO_3$ and $Li_2SO_4$ is the same as described in an exemplary embodiment described above, and will be omitted here.

Meanwhile, in the present exemplary embodiment, the coating layer forming material includes a boron compound, LiOH and $Li_2SO_4$. That is, $Li_2CO_3$ included in the coating layer of the finally obtained positive electrode active material is formed by the internal reaction of other raw materials introduced in the manufacturing process, and no separate raw material is added.

In the coating layer forming material, a content of the boron compound may be 300 ppm to 2,000 ppm, more specifically 300 ppm to 1,000 ppm based on the entire coating layer forming material. When the content of the boron compound injected into the coating layer forming material satisfies the range, excellent thermal stability is exhibited because the crystal grain size of the positive electrode active material ranges from 80 nm to 210 nm.

At this time, the boron compound includes, for example, $H_3BO_3$, boron oxide, a boron compound including Li, BN, $B_4C$, $B_2H_6$, $B_2F_4$, $B_2Cl_4$, $B_2Br_4$, $B_2I_4$, and the like.

In addition, the content of the LiOH included in the coating layer forming material may range from 10 ppm to 1,000 ppm, more specifically from 50 ppm to 700 ppm, and more specifically from 120 ppm to 300 ppm based on the entire coating layer forming material. When the content of LiOH injected as a coating layer forming material satisfies the range, it is possible to manufacture slurry in a state that can be applied to the electrode when manufacturing a positive electrode by suppressing the gelation phenomenon of the slurry caused by residual lithium.

The content of $Li_2SO_4$ included in the coating layer forming material is 10ppm to 500ppm, more specifically 10ppm to 200ppm, more specifically 10ppm to 100ppm, more specifically 20ppm to 5ppm based on the entire coating layer forming material. When the content of $Li_2SO_4$ injected into the coating layer forming material satisfies the range, a lithium secondary battery with excellent cycle-life characteristics can be implemented by improving the mobility of lithium ions on the surface of the positive electrode active material because a Li-B-C-$SO_4$ based ion conductor is formed on the surface.

That is, in the present embodiment, the input amount of LiOH and $Li_2SO_4$ is less than that of LiOH and $Li_2SO_4$ present in the coating layer of the finally obtained positive electrode active material. This is expected to be caused by the reaction of lithium and metal raw materials present in lithium metal oxide in the secondary heat treatment process after the coating layer forming material is injected.

Specific characteristics of the positive electrode active material manufactured by the above method are the same as those described in an exemplary embodiment, and will be omitted here.

In addition, process conditions for manufacturing the positive electrode active material of the present exemplary embodiment will be described in more detail in an exemplary embodiment to be described later.

Another exemplary embodiment is related to a lithium secondary battery, comprising: a positive electrode comprising the positive electrode active material of the embodiment; a negative electrode; and a non-aqueous electrolyte.

A description related to the positive electrode active material will be omitted because it is the same as that of an exemplary embodiment described above.

The positive electrode active material layer may include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery.

The negative electrode includes a current collector and a negative electrode active material layer formed on the current collector, and the negative electrode active material layer includes a negative electrode active material.

The negative electrode active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material. In a lithium ion secondary battery, any generally-used carbon-based negative electrode active material can be used, and typical examples thereof are crystalline carbon and amorphous carbon, or combination thereof.

The alloy of the lithium metal is alloy of lithium and metal selected from the group consisting of Na, K, Rb, Cs, Fr, Be, Mg, Ca, Sr, Si, Sb, Pb, In, Zn, Ba, Ra, Ge, Al and Sn.

Materials capable of doping and undoping the lithium include Si, $SiO_x$ (0 < x < 2), Si-Y alloy (the Y is an element selected from the group consisting of an alkali metal, an alkaline earth metal, a group 13 element, a group 14 element, a transition metal, and a rare earth, and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative electrode active material layer also includes a binder and may optionally further include a conductive material.

The binder serves to attach the negative electrode active material particles well to each other and to attach the negative electrode active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode and positive electrode are prepared by mixing active material, conductive material and binder in a solvent to prepare an active material composition, and applying this composition to a current collector. Since such an electrode manufacturing method is widely known in the field, detailed description will be omitted in this specification. As the solvent, N-methylpyrrolidone and the like can be used, but is not limited thereto.

The electrolyte contains a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, a mixed multilayer such as a polyethylene/polypropylene/polyethylene 3-layer separator, polypropylene/polyethylene/polypropylene 3-layer separator, can be used.

Lithium secondary batteries can be classified into lithium ion batteries, lithium ion polymer batteries and lithium polymer batteries according to the type of separator and electrolyte used, and can be classified into cylindrical, prismatic, coin-type, and pouch-type depending on the shape. It can be divided into bulk type and thin film type according to size. Since the structures and manufacturing methods of these batteries are well known in this field, detailed descriptions are omitted.

Hereinafter, an exemplary embodiment will be described in detail. However, this is presented as an example, and the present invention is not limited thereby, and the present invention is only defined by the range of claims to be described later.

**Preparation Example 1 - Preparation of positive electrode active material precursor**

A precursor having the composition $(Ni_{0.92}Co_{0.04}Mn_{0.04}OH)_2$ was prepared by a general co-precipitation method.

Specifically, $NiSO_4 \cdot 6H_2O$ was used as the nickel raw material, $CoSO_4 \cdot 7H_2O$ as the cobalt raw material, and $MnSO_4 \cdot H_2O$ as the manganese raw material. These raw materials were dissolved in distilled water to prepare a metal salt aqueous solution.

Next, after preparing the co-precipitation reactor, $N_2$ was purged to prevent oxidation of metal ions during the co-precipitation reaction, and the temperature of the reactor was maintained at 50°C.

$NH_4(OH)$ was added to the co-precipitation reaction as a chelating agent, and NaOH was used for pH control.

The precipitate obtained according to the co-precipitation process was filtered, washed with distilled water, and dried in an oven at 100 °C for 24 hours to prepare a positive electrode active material precursor having an average diameter of 14.8 $\mu$m.

**Comparative Example 1 - Manufacture of Ni 90% positive electrode active material**

Based on 1 mol of the positive electrode active material precursor prepared in Preparation Example 1, a mixture was prepared by uniformly mixing 1.05 mol of $LiOH \cdot H_2O$ (Samjeon Chemical, battery grade) and a doping raw material. At this time, as the doping material, $ZrO_2$ (Aldrich, 3N) was used so that Zr was 3,400 ppm, and $Al(OH)_3$ (Aldrich, 4N) was used so that Al was 280 ppm.

The mixture was loaded into a tube furnace and sintered while oxygen was inflowed at 200 mL/min. In this sintering process, the first heat treatment was performed at 480 °C for 5 hours, then the temperature was raised to 760 °C at a heating rate of 5 °C/min, maintained at this temperature for 16 hours, and then the product subjected to the sintering process was naturally cooled to 25 °C to prepare a positive electrode active material.

**Comparative Example 2 - Ni 90% positive electrode active material containing W 500ppm**

Based on 1 mol of the positive electrode active material precursor prepared in Preparation Example 1, a mixture was prepared by uniformly mixing 1.05 mol of $LiOH \cdot H_2O$ (Samjeon Chemical, battery grade) and a doping raw material. At this time, as the doping material, $ZrO_2$ (Aldrich, 3N) was used so that Zr was 3,400 ppm, and $Al(OH)_3$ (Aldrich, 4N) was used so that Al was 280 ppm.

The mixture was loaded into a tube furnace and fired while oxygen was inflowed at 200 mL/min. In this sintering process, the first heat treatment was performed at 480 °C for 5 hours, then the temperature was raised to 760 °C at a heating rate of 5 °C/min, maintained at this temperature for 16 hours, and then the product subjected to the sintering process was naturally cooled to 25 °C.

Subsequently, the positive electrode powder was washed with distilled water mixed with 0.002 M of ammonium meta-tungstate (AMT) using distilled water, filtered and dried to prepare a positive electrode active material coated with tungsten (W) on the surface.

**Comparative Example 3 - Ni 90% positive electrode active material containing B 500ppm**

The cooling product was washed with distilled water, not a mixture of distilled water and AMT, filtered, dried, mixed with 500 ppm of $H_3BO_3$ (Aldrich) dry, and then subjected to secondary heat treatment at 280 °C for 5 hours. A positive electrode active material with a coating layer containing 500 ppm of B on the surface was prepared by the same method as in Comparative Example 2, except that.

**Comparative Example 4 - Ni 90% positive electrode active material containing 1700 ppm LiOH and 3000 ppm $Li_2CO_3$**

A positive electrode active material with a coating layer containing 1,700 ppm LiOH and 3,000 ppm $Li_2CO_3$ was formed on the surface in the same method as Comparative Example 3, except that the cooling product was dry mixed with 250 ppm of LiOH based on Li and then subjected to secondary heat treatment.

**Comparative Example 5 - Ni 90% positive electrode active material containing LiOH 1700ppm, $Li_2CO_3$ 3000ppm, $Li_2SO_4$ 300ppm**

A positive electrode active material with a coating layer containing 1,700 ppm LiOH and 3,000 ppm $Li_2CO_3$ and 500 ppm $Li_2SO_4$ was prepared on the surface in the same method as Comparative Example 3, except that the cooling product was dry mixed with 250 ppm LiOH and 30 ppm $Li_2SO_4$ based on Li and S, and then subjected to secondary heat treatment.

**Exemplary embodiment 1 - Ni 90% positive electrode active material containing B 500ppm, W 500ppm, LiOH 1,700ppm, $Li_2CO_3$ 3,000ppm, $Li_2SO_4$ 300ppm**

A positive electrode active coating layer containing W 500ppm, B 500ppm, LiOH 1700ppm, $Li_2CO_3$ 3,000ppm and $Li_2SO_4$ 300ppm was formed on the surface in the same method as in Comparative Example 2, except that the cooling product was dry mixed with $H_3BO_3$ 500ppm, LiOH 250ppm, $Li_2SO_4$ 30ppm based on Li and S, and then secondary heat treatment.

**Example embodiment 2-1 - Manufacture of Ni 90% positive electrode material including W 10ppm, B 500ppm, LiOH 1,700ppm, $Li_2CO_3$ 3,000ppm, $Li_2SO_4$ 300ppm**

The precursor having a composition of $(Ni_{0.92}Co_{0.04}Mn_{0.04})(OH)_2$ was uniformly mixed with $LiOH·H_2O$ (Samjeon Chemical, battery grade) in a 1:1.05 molar ratio, $ZrO_2$ (Aldrich, 4N) to make Zr 3,400ppm, and $Al(OH)_3$ (Aldrich, 4N) to make Al 280ppm, and then mixed them uniformly in a tube furnace (interior diameter 50mm, length 1,000mm) and sintered while inflowing oxygen at 200mL/min. The sintering condition was maintained at 480°C for 5h and then at 700-750°C for 16h, and the heating speed was 5°C/min.

Thereafter, after cooling to room temperature, the sintered body was crushed/classified to produce a positive electrode material. Based on 200g of positive electrode material, the positive electrode powder was washed with water with a mixture of 0.002M of ammonium meta-tungstate (AMT) in 100g of distilled water (DI water), filtered, and dehydrated with a filter press. The recovered positive electrode material was dried at 80 degrees for 12 hours, and $H_3BO_3$ 500ppm, LiOH 250ppm, and $Li_2SO_4$ 30ppm were quantified and mixed using a mixer, and then secondary heat treatment was performed at 280°C to prepare a positive electrode material.

**Example embodiment 2-2 - Manufacture of Ni 90% positive electrode material including W 50ppm B 500ppm, LiOH 1,700ppm, $Li_2CO_3$ 3,000ppm, $Li_2SO_4$ 300ppm**

A positive electrode material was manufactured by the same method as in Example 2-1, except that 0.0002M of AMT was dissolved and washed with water in the washing process.

**Example embodiment 2-3 - Manufacture of Ni 90% positive electrode material including W 100ppm B 500ppm, LiOH 1,700ppm, $Li_2CO_3$ 3,000ppm, $Li_2SO_4$ 300ppm**

A positive electrode material was manufactured by the same method as in Example 2-1, except that 0.0005M of AMT was dissolved and washed with water in the washing process.

**Example embodiment 2-4 - Manufacture of Ni 90% positive electrode material including W 1,000ppm B 500ppm, LiOH 1,700ppm, $Li_2CO_3$ 3,000ppm, $Li_2SO_4$ 300ppm**

A positive electrode material was manufactured by the same method as in Example 2-1, except that 0.01M of AMT was dissolved and washed with water in the washing process.

**Exemplary embodiment 2-5 - Manufacture of Ni 90% positive electrode material including W 3,000ppm B 500ppm, LiOH 1,700ppm, $Li_2CO_3$ 3,000ppm, $Li_2SO_4$ 300ppm**

A positive electrode material was manufactured by the same method as in Example 2-1, except that 0.05M of AMT was dissolved and washed with water in the washing process.

**Example embodiment 2-6 - Manufacture of Ni 90% positive electrode material including W 10,000ppm B 500ppm, LiOH 1,700ppm, $Li_2CO_3$ 3,000ppm, $Li_2SO_4$ 300ppm**

A positive electrode material was manufactured by the same method as in Example 2-1, except that 0.5M of AMT was dissolved and washed with water in the washing process.

**Example embodiment 3-1 - Ni 90% positive electrode material manufacturing including W 500ppm, B 500ppm, LiOH 1,700ppm, $Li_2CO_3$ 3,000ppm, $Li_2SO_4$ 10ppm**

The precursor having a composition of $(Ni_{0.92}Co_{0.04}Mn_{0.04})(OH)_2$ was uniformly mixed with $LiOH \cdot H_2O$ (Samjeon Chemical, battery grade) in a 1:1.05 molar ratio, $ZrO_2$ (Aldrich, 4N) so that Zr was 3,400 ppm, and $Al(OH)_3$ (Aldrich, 4N) so that Al was 280 ppm, and then mixed in a tube furnace (interior diameter 50 mm, length 1,000mm) and sintered while inflowing oxygen at 200mL/min. The sintering condition was maintained at 480°C for 5h and then at 700-750°C for 16h, and the heating speed was 5°C/min.

After cooling to room temperature, the sintered body was ground/classified to produce a positive electrode material. Based on 200g of positive electrode material, the positive electrode powder was washed with water with a mixture of 0.002M of ammonium meta-tungstate (AMT) in 100g of distilled water (DI water), filtered, and dehydrated with a filter press. The recovered positive electrode material was dried at 80 °C for 12 hours, and after mixing 500 ppm of $H_3BO_3$, 250 ppm of LiOH, and 10 ppm of $Li_2SO_4$ using a mixer, secondary heat treatment was performed at 280 °C to prepare a positive electrode material.

**Example embodiment 3-2 - Ni 90% positive electrode material manufacturing including W 500ppm, B 500ppm, LiOH 1,700ppm, $Li_2CO_3$ 3,000ppm, $Li_2SO_4$ 100ppm**

Except for adding 500ppm of B, 250ppm of LiOH, and 20ppm of $Li_2SO_4$, the positive electrode material manufacturing method was the same as exemplary embodiment 3-1, and the positive electrode material was manufactured.

**Example embodiment 3-3 - Ni 90% positive electrode material manufacturing including W 500ppm, B 500ppm, LiOH 1,700ppm, $Li_2CO_3$ 3,000ppm, $Li_2SO_4$ 500ppm**

Except for adding 500 ppm of B, 250 ppm of LiOH, and 60 ppm of $Li_2SO_4$, the positive electrode material manufacturing method was the same as exemplary embodiment 3-1 to manufacture the positive electrode material.

**Example embodiment 3-4 - Ni 90% positive electrode material manufacturing including W 500ppm, B 500ppm, LiOH 1,700ppm, $Li_2CO_3$ 3,000ppm, $Li_2SO_4$ 1,000ppm**

Except for adding 500ppm of B, 250ppm of LiOH, and 120ppm of $Li_2SO_4$, the positive electrode material manufacturing method was the same as exemplary embodiment 3-1 to manufacture the positive electrode material.

**Exemplary embodiment 3-5 - Manufacture of Ni 90% positive electrode material including W 500ppm, B 500ppm, LiOH 1,700ppm, $Li_2CO_3$ 3000ppm, $Li_2SO_4$ 3,000ppm**

Except for adding 500ppm of B, 250ppm of LiOH, and 250ppm of $Li_2SO_4$, the positive electrode material manufacturing method was the same as exemplary embodiment 3-1, and the positive electrode material was manufactured.

**Example embodiment 4-1 - Ni 90% positive electrode material manufacturing including W 500ppm, B 500ppm, LiOH 100ppm, $Li_2CO_3$ 3000ppm, $Li_2SO_4$ 300ppm**

Except for adding 50 ppm of LiOH, the positive electrode material manufacturing method was the same as Example Embodiment 1 to manufacture the positive electrode material.

**Example embodiment 4-2 - Ni 90% positive electrode material manufacturing including W 500ppm, B 500ppm, LiOH 1,000ppm, $Li_2CO_3$ 3,000ppm, $Li_2SO_4$ 300ppm**

Except for the addition of 100 ppm of LiOH, the positive electrode material manufacturing method was the same method as Example Embodiment 1 to manufacture the positive electrode material.

**Example embodiment 4-3 - Ni 90% positive electrode material manufacturing including W 500ppm, B 500ppm, LiOH 5,000ppm, $Li_2CO_3$ 3,000ppm, $Li_2SO_4$ 300ppm**

Except for the addition of 500 ppm LiOH, the positive electrode material manufacturing method was the same method as Example Embodiment 1 to manufacture the positive electrode material.

**exemplary embodiment 4-4** - Ni 90% positive electrode material manufacturing including W 500ppm, B 500ppm, LiOH 10,000ppm, $Li_2CO_3$ 3,000ppm, $Li_2SO_4$ 300ppm

Except for adding 1,000 ppm of LiOH, the positive electrode material manufacturing method was the same as Example 1, and the positive electrode material was manufactured.

**Example embodiment 5-1** - Ni 90% positive electrode material manufacturing including W 500ppm, B 500ppm, LiOH 1,700ppm, $Li_2CO_3$ 3,000ppm, $Li_2SO_4$ 300ppm

Except for carrying out the secondary heat treatment temperature at 200 °C, the positive electrode material manufacturing method was the same method as exemplary embodiment 1 to manufacture the positive electrode material.

**Example embodiment 5-2 Manufacture of Ni 90% positive electrode material including W 500ppm, B 500ppm, LiOH 1,700ppm, $Li_2CO_3$ 3,000ppm, $Li_2SO_4$ 300ppm**

Except for carrying out the secondary heat treatment temperature at 220 °C, the positive electrode material manufacturing method was the same method as exemplary embodiment 1 to manufacture the positive electrode material.

**Example embodiment 5-3** - Ni 90% positive electrode material manufacturing including W 500ppm, B 500ppm, LiOH 1,700ppm, $Li_2CO_3$ 3,000ppm, $Li_2SO_4$ 300ppm

Except for carrying out the secondary heat treatment temperature at 240 °C, the positive electrode material manufacturing method was the same method as exemplary embodiment 1 to manufacture the positive electrode material.

**Example embodiment 5-4** - Ni 90% positive electrode material manufacturing including W 500ppm, B 500ppm, LiOH 1,700ppm, $Li_2CO_3$ 3,000ppm, $Li_2SO_4$ 300ppm

Except for carrying out the secondary heat treatment temperature at 260 °C, the rest of the positive electrode material manufacturing method was the same method as exemplary embodiment 1 to manufacture the positive electrode material.

**Example embodiment 5-5** - Manufacture of Ni 90% positive electrode material including W 500ppm, B 500ppm, LiOH 1,700ppm, $Li_2CO_3$ 3000ppm, $Li_2SO_4$ 300ppm

Except for carrying out the secondary heat treatment temperature at 300 °C, the rest of the positive electrode material manufacturing method was the same method as exemplary embodiment 1 to manufacture the positive electrode material.

**Example embodiment 5-6** - Manufacture of Ni 90% positive electrode material including W 500ppm, B 500ppm, LiOH 1,700ppm, $Li_2CO_3$ 3,000ppm, $Li_2SO_4$ 300ppm

Except for carrying out the secondary heat treatment temperature at 450 °C, the rest of the positive electrode material manufacturing method was the same method as exemplary embodiment 1 to manufacture the positive electrode material.

**Example embodiment 6-1** - Ni 90% positive electrode material manufacturing including Nb 10ppm, B 500ppm, LiOH 1,700ppm, $Li_2CO_3$ 3,000ppm, $Li_2SO_4$ 300ppm

The positive electrode material was manufactured in the same way as exemplary embodiment 1 for the positive electrode material manufacturing method, except that 0.005M ammonium niobium oxalate was dissolved and washed with water as a Nb source instead of ammonium meta tungstate (AMT) in the water washing process.

**Example embodiment 6-2** - Manufacture of Ni 90% positive electrode material containing Nb 50ppm, B 500ppm, LiOH 1,700ppm, $Li_2CO_3$ 3,000ppm, $Li_2SO_4$ 300ppm

The positive electrode material was manufactured by the same method as exemplary embodiment 1 for the positive electrode material manufacturing method, except that 0.01M ammonium niobium oxalate was dissolved and washed with water as a Nb source instead of ammonium meta tungstate (AMT) in the water washing process.

**Example embodiment 6-3 - Ni 90% positive electrode material manufacturing including Nb 100ppm, B 500ppm, LiOH 1,700ppm, Li$_2$CO$_3$ 3,000ppm, Li$_2$SO$_4$ 300ppm**

The positive electrode material was manufactured by the same method as exemplary embodiment 1 for the positive electrode material manufacturing method, except that 0.02M of ammonium niobium oxalate was dissolved and washed with water as a Nb source instead of ammonium meta tungstate (AMT) in the water washing process.

**Example embodiment 6-4 - Ni 90% positive electrode material manufacturing including Nb 500ppm, B 500ppm, LiOH 1,700ppm, Li$_2$CO$_3$ 3,000ppm, Li$_2$SO$_4$ 300ppm**

The positive electrode material was manufactured by the same method as exemplary embodiment 1 for the positive electrode material manufacturing method, except that 0.03M ammonium niobium oxalate was dissolved and washed with water as a Nb source instead of ammonium meta tungstate (AMT) in the water washing process.

**Example embodiment 6-5 - Manufacture of Ni 90% positive electrode material containing Nb 1,000ppm, B 500ppm, LiOH 1,700ppm, Li$_2$CO$_3$ 3,000ppm, Li$_2$SO$_4$ 300ppm**

The positive electrode material was manufactured by the same method as exemplary embodiment 1 for the positive electrode material manufacturing method, except that 0.05M ammonium niobium oxalate was dissolved and washed with water as a Nb source instead of ammonium meta tungstate (AMT) in the water washing process.

**Example embodiment 6-6 - Manufacture of Ni 90% positive electrode material including Nb 3,000ppm, B 500ppm, LiOH 1,700ppm, Li$_2$CO$_3$ 3,000ppm, Li$_2$SO$_4$ 300ppm**

In the water washing process, the positive electrode material was manufactured by the same method as exemplary embodiment 1 for the positive electrode material manufacturing method, except that 0.1M ammonium niobium oxalate was dissolved and washed with Nb source instead of ammonium meta tungstate (AMT).

**Example embodiment 6-7 - Manufacture of Ni 90% positive electrode material containing Nb 10,000ppm, B 500ppm, LiOH 1,700ppm, Li$_2$CO$_3$ 3,000ppm, Li$_2$SO$_4$ 300ppm**

In the water washing process, the positive electrode material was manufactured by the same method as illustrated embodiment 1 for the the positive electrode material manufacturing method, except that 0.3M ammonium niobium oxalate was dissolved and washed with Nb source instead of ammonium meta tungstate (AMT).

**(Experimental Example 1) Evaluation of electrochemical performance**

**(1) coin-type half-cell fabrication**

A coin-type half-cell was manufactured using the positive electrode active material prepared according to exemplary embodiment 1, exemplary embodiment 2-1 to 2-6, exemplary embodiment 3-1 to 3-5, exemplary embodiment 4-1 to 4-4, exemplary embodiment 5-1 to 5-6, exemplary embodiment 6-1 to 6-7, and Comparative Example 1 to 5.

Positive electrode active material, Denka black conductive material, and polyvinylidene fluoride binder (trade name: KF1100) were mixed at a weight ratio of 92.5:3.5:4, and this mixture was added to N-Methyl-2-pyrrolidone solvent to have a solid content of about 30 wt% to prepare a positive electrode active material slurry.

The slurry was coated on aluminum foil (Al foil, thickness: 15 $\mu$m), which is a positive electrode current collector, using a doctor blade (Doctor blade), dried, and rolled to prepare a positive electrode. The loading amount of the positive electrode was 14.6 mg/cm$^2$, and the rolling density was 3.1 g/cm$^3$.

A 2032 coin-type half cell was prepared by a conventional method using the positive electrode, lithium metal negative electrode (200pm, Honzo metal), electrolyte solution and polypropylene separator. The electrolyte solution is the product obtained by dissolving 1M LiPF$_6$ in a mixed solvent of ethylene carbonate (EC), dimethyl carbonate (DMC) and ethylmethyl carbonate (EMC) (mixing ratio EC:DMC:EMC=3:4:3 volume ratio), and 1.5 wt% of vinylene carbonate was added to 100 wt% of the entire solution.

**(2) Evaluation of charge and discharge characteristics**

After aging the prepared coin-type half cell at room temperature 25 °C for 10 hours, charging and discharging were performed.

The capacity evaluation was based on 215mAh/g, and the charge and discharge conditions were constant current (CC) / constant voltage (CV) 2.5V to 4.25V, and 1/20C cut-off. Initial capacity was performed under 0.1C charge/0.1C discharge condition.

The resistance was calculated by measuring the voltage fluctuation for 60 seconds after applying a 0.2C discharge current at 100% of 4.25V charging at 0.2C. The results are shown in Table 1 below.

**(3) Cycle-life characteristic measurement**

The high temperature cycle characteristic was measured 30 times with 0.3C charge/0.3C discharge condition at high temperature 45°C, and then the ratio of the 30th capacity to the first capacity was measured. The resistance was calculated by measuring the voltage fluctuation 60 seconds after the discharge current was applied at 100% of 4.25V charge.

The resistance increase rate was measured by performing the same method as the initial resistance measurement method after 30 cycle compared to the resistance initially measured at high temperature 45 °C (high temperature initial resistance), and the increase rate was converted into percentage (%).

The measurement results are shown in Table 2 below.

(Table 1)

| Category 1 | Category 2 | 0.1C charge [mAh/g] | 0.1C discharge amount [mAh/g] | 1st efficiency [%] | initial resistance [$\Omega$] |
|---|---|---|---|---|---|
| bare | Comparative Example1 | 232.3 | 205.9 | 88.6 | 16.8 |
| W | Comparative Example2 | 238.3 | 217 | 91.1 | 23.3 |
| B | Comparative Examples | 238 | 215.7 | 90.6 | 23.3 |
| O, C | Comparative Example4 | 239 | 217.6 | 91.0 | 22.7 |
| O, C, S | Comparative Examples | 240.4 | 219.7 | 91.4 | 22 |
| W, B, O, C, 8 | **exemplary embodiment 1** | 243.2 | 223.4 | 91.9 | 21 |
| W10 | exemplary embodiment 2-1 | 240.3 | 219.6 | 91.4 | 22.8 |
| W50 | exemplary embodiment 2-2 | 240.2 | 220 | 91.6 | 21.8 |
| W100 | exemplary embodiment 2-3 | 239.6 | 220.7 | 92.1 | 22.1 |
| W500 | **exemplary embodiment 1** | 243.2 | 223.4 | 91.9 | 20.3 |
| W1000 | exemplary embodiment 2-4 | 240.5 | 219.3 | 91.2 | 21 |
| W3000 | exemplary embodiment 2-5 | 240.1 | 219.1 | 91.3 | 21.5 |
| W10000 | exemplary embodiment 2-6 | 240.2 | 215 | 89.5 | 23.5 |
| S10 | exemplary embodiment 3-1 | 240 | 219.6 | 91.5 | 21.7 |

(continued)

| Category 1 | Category 2 | 0.1C charge [mAh/g] | 0.1C discharge amount [mAh/g] | 1st efficiency [%] | initial resistance [Ω] |
|---|---|---|---|---|---|
| S100 | exemplary embodiment 3-2 | 240.3 | 219.3 | 91.3 | 21.8 |
| S300 | **exemplary embodiment 1** | 243.2 | 223.4 | 91.9 | 21 |
| S500 | exemplary embodiment 3-3 | 239.4 | 218.9 | 91.4 | 21.9 |
| S1000 | exemplary embodiment 3-4 | 238.2 | 215.1 | 90.3 | 22.9 |
| S3000 | exemplary embodiment 3-5 | 238.8 | 215.9 | 90.4 | 22.6 |
| 0500 | exemplary embodiment 4-1 | 238.9 | 218.6 | 91.5 | 22.7 |
| O1000 | exemplary embodiment 4-2 | 240.3 | 220.8 | 91.9 | 22.1 |
| O1700 | **exemplary embodiment 1** | 243.2 | 223.4 | 91.9 | 21 |
| O5000 | exemplary embodiment 4-3 | 235.3 | 217.4 | 92.4 | 22.2 |
| O10000 | exemplary embodiment 4-4 | 233.1 | 215.8 | 92.6 | 24.7 |
| T200 | exemplary embodiment 5-1 | 237 | 217.2 | 91.6 | 26.1 |
| T220 | exemplary embodiment 5-2 | 239.8 | 218.8 | 91.2 | 25.9 |
| T240 | exemplary embodiment 5-3 | 237.1 | 219.5 | 92.6 | 23.8 |
| T260 | exemplary embodiment 5-4 | 240 | 220.1 | 91.7 | 23.5 |
| T280 | **exemplary embodiment 1** | 243.2 | 223.4 | 91.9 | 21 |
| T300 | exemplary embodiment 5-5 | 238.5 | 217.5 | 91.2 | 23.1 |
| T450 | exemplary embodiment 5-6 | 237.1 | 208.9 | 88.1 | 25.1 |
| Nb10 | exemplary embodiment 6-1 | 237.5 | 215.1 | 90.6 | 23.9 |
| Nb50 | exemplary embodiment 6-2 | 240.2 | 217.5 | 90.5 | 23.7 |
| Nb100 | exemplary embodiment 6-3 | 239.7 | 218.8 | 91.3 | 22.1 |
| Nb500 | exemplary embodiment 6-4 | 240.1 | 219.8 | 91.5 | 22 |

(continued)

| Category 1 | Category 2 | 0.1C charge [mAh/g] | 0.1C discharge amount [mAh/g] | 1st efficiency [%] | initial resistance [Ω] |
|---|---|---|---|---|---|
| Nb1000 | exemplary embodiment 6-5 | 241.5 | 217.5 | 90.1 | 23.8 |
| Nb3000 | exemplary embodiment 6-6 | 237.2 | 215.8 | 91.0 | 24.2 |
| Nb10000 | exemplary embodiment 6-7 | 235 | 210.1 | 89.4 | 24.6 |

(Table 2)

| | cycle-life [%] | 1st resistance [Ω] | 30th resistance [Ω] | Resistance increase rate [%] |
|---|---|---|---|---|
| Comparative Example1 | 71.2 | 10.5 | 19.4 | 84.8 |
| Comparative Example2 | 81.2 | 13.5 | 24.6 | 82.2 |
| Comparative Examples | 79.9 | 13.6 | 24.7 | 81.6 |
| Comparative Example4 | 71.2 | 13.5 | 24.7 | 83.0 |
| Comparative Examples | 89.4 | 12.9 | 27.6 | 114.0 |
| **exemplary embodiment 1** | 91 | 13.5 | 19.6 | 45.2 |
| exemplary embodiment 2-1 | 90.9 | 13.1 | 23.1 | 76.3 |
| exemplary embodiment 2-2 | 90.5 | 12.9 | 22.5 | 74.4 |
| exemplary embodiment 2-3 | 90.3 | 13.2 | 21.2 | 60.6 |
| **exemplary embodiment 1** | 91 | 13.5 | 19.6 | 45.2 |
| exemplary embodiment 2-4 | 87.5 | 13.5 | 20.5 | 51.9 |
| exemplary embodiment 2-5 | 88.6 | 12.5 | 22 | 76.0 |
| exemplary embodiment 2-6 | 90.5 | 12.9 | 23.6 | 82.9 |
| exemplary embodiment 3-1 | 89.6 | 13.1 | 20.4 | 55.7 |
| exemplary embodiment 3-2 | 88.7 | 13.5 | 21.2 | 57.0 |
| **exemplary embodiment 1** | 91 | 13.5 | 19.6 | 45.2 |
| exemplary embodiment 3-3 | 92.5 | 12.4 | 18 | 45.2 |
| exemplary embodiment 3-4 | 91 | 12.9 | 19 | 47.3 |
| exemplary embodiment 3-5 | 89 | 12.8 | 19 | 48.4 |
| exemplary embodiment 3-6 | 90.1 | 12.3 | 18.6 | 51.2 |
| exemplary embodiment 4-1 | 91.8 | 13.2 | 20.1 | 52.3 |
| **exemplary embodiment 1** | 91 | 13.5 | 19.6 | 45.2 |
| exemplary embodiment 4-3 | 90.8 | 13.3 | 22.1 | 66.2 |
| exemplary embodiment 4-4 | 89.5 | 14.1 | 25 | 77.3 |
| exemplary embodiment 5-1 | 90.5 | 14.8 | 26 | 75.7 |
| exemplary embodiment 5-2 | 90.1 | 15.1 | 25 | 65.6 |
| exemplary embodiment 5-3 | 90.8 | 14 | 22.6 | 61.4 |
| exemplary embodiment 5-4 | 91.2 | 13.9 | 21.5 | 54.7 |

(continued)

|  | cycle-life [%] | 1st resistance [$\Omega$] | 30th resistance [$\Omega$] | Resistance increase rate [%] |
|---|---|---|---|---|
| **exemplary embodiment 1** | 91 | 13.5 | 19.6 | 45.2 |
| exemplary embodiment 5-5 | 90.5 | 13.4 | 21.4 | 59.7 |
| exemplary embodiment 5-6 | 85 | 12.9 | 23.5 | 82.2 |
| exemplary embodiment 6-1 | 90.1 | 15.1 | 25.8 | 70.9 |
| exemplary embodiment 6-2 | 90.4 | 14.5 | 24.5 | 69.0 |
| exemplary embodiment 6-3 | 91.5 | 13.5 | 22 | 63.0 |
| exemplary embodiment 6-4 | 93.7 | 13.2 | 21.2 | 60.6 |
| exemplary embodiment 6-5 | 92.5 | 13.9 | 23.3 | 67.6 |
| exemplary embodiment 6-6 | 92 | 14.8 | 24.6 | 66.2 |
| exemplary embodiment 6-7 | 89.7 | 15.8 | 26.9 | 70.3 |

Table 1 shows initial efficiency and initial resistance measurement results at room temperature for positive electrode active materials manufactured according to exemplary embodiment 1, exemplary embodiment 2-1 to 2-6, exemplary embodiment 3-1 to 3-5, exemplary embodiment 4-1 to 4-4, exemplary embodiment 5-1 to 5-6, exemplary embodiment 6-1 to 6-7, and Comparative Example 1 to 5.

Table 2 shows measurement results of high temperature cycle-life and resistance increase rate for positive electrode active materials manufactured according to exemplary embodiment 1, exemplary embodiment 2-1 to 2-6, exemplary embodiment 3-1 to 3-5, exemplary embodiment 4-1 to 4-4, exemplary embodiment 5-1 to 5-6, exemplary embodiment 6-1 to 6-7, and Comparative Example 1 to 5.

Referring to Table 1 and Table 2, the positive electrode active material according to embodiment 1, exemplary embodiment 2-1 to 2-6, exemplary embodiment 3-1 to 3-5, exemplary embodiment 4-1 to 4-4, exemplary embodiment 5-1 to 5-6, embodiment 6-1 to 6-7 including W or Nb, B, LiOH, $Li_2CO_3$ and $Li_2SO_4$ in the coating layer, and Comparative Example 1 to 5, overall initial capacity and high temperature cycle-life characteristics were improved. In addition, it can be seen that both the initial and high temperature resistance and the resistance increase rate are reduced, compared to the positive electrode active material according to Comparative Examples 1 to 5, where no coating layer is formed or a coating layer is formed that does not contain W or Nb, B, LiOH, $Li_2CO_3$ and $Li_2SO_4$,

**(Experimental Example 2) TEM analysis of positive electrode active material**

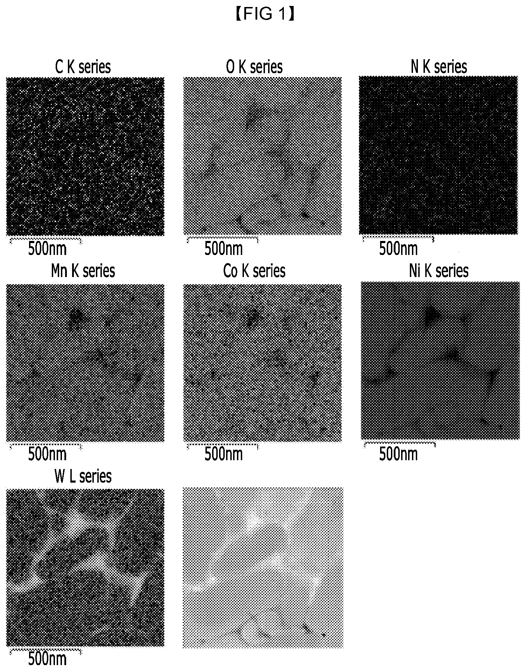

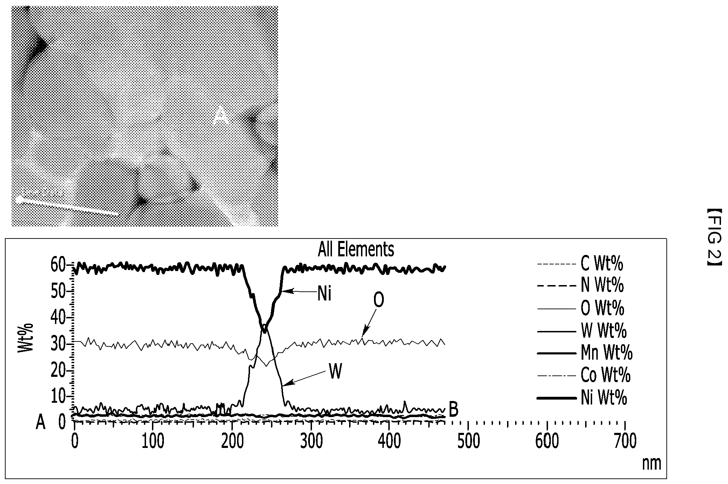

The positive electrode active material prepared in exemplary embodiment 1 was subjected to TEM (Transmission Electron Microscope)/EDS (Energy Dispersive X-Ray Spectrometer) analysis and shown in FIG 1 and FIG 2.

From the results of FIG. 1, it can be seen that tungsten penetrates between primary particles to form a coating layer.

FIG 2 shows the cross-sectional EDS line profile image of Example 1, and it can be seen that W is uniformly distributed among the primary particles of the positive electrode material.

At this time, it was confirmed that the ratio ($I_{Ni}/I_W$) of the intensity absolute values of the Ni and W peaks was about 0.60 in the EDS line profile result.

**(Experimental Example 3) XPS analysis of positive electrode active material**

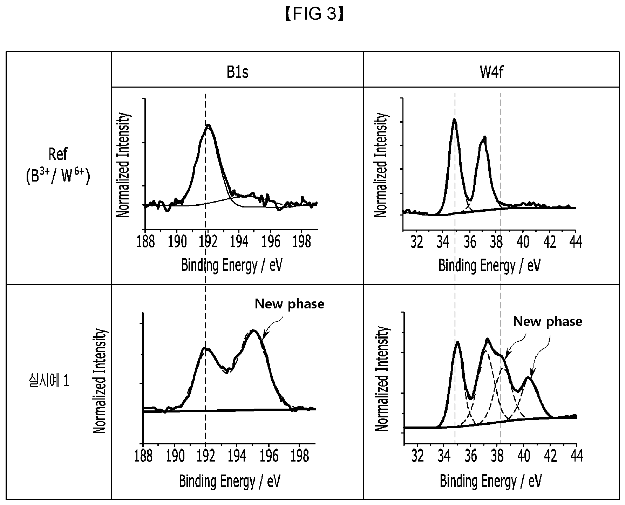

XPS (X-ray Photoelectron Spectroscopy) analysis of the positive electrode active material prepared in Example Embodiment 1 was performed and shown in FIG 3 and Table 3 below. FIG 3 and Table 3 below show peaks of $B^{3+}$ and $W^{6+}$ of Example Embodiment 1, $B_2O_3$ and $Li_2WO_4$. That is, FIG. 3 and Table 3 relate to the XPS B1s and W4f peak analysis of exemplary embodiment 1, $B_2O_3$, and $WO_3$. In the case of exemplary embodiment 1, the formation of new phases was confirmed in both B1s (195.0 eV) and W4f (38.5 eV).

(Table 3)

| | B1s | | W4f (Based on the left peak among 2 sets of peaks) | |
| --- | --- | --- | --- | --- |
| | Ref | New phase | Ref | New phase |
| Ref ($B_2O_3$ / $WO_3$) | 192.1 | - | 34.9 | - |
| exemplary embodiment 1 | 192.1 | 195.0 | 35.0 | 38.5 |

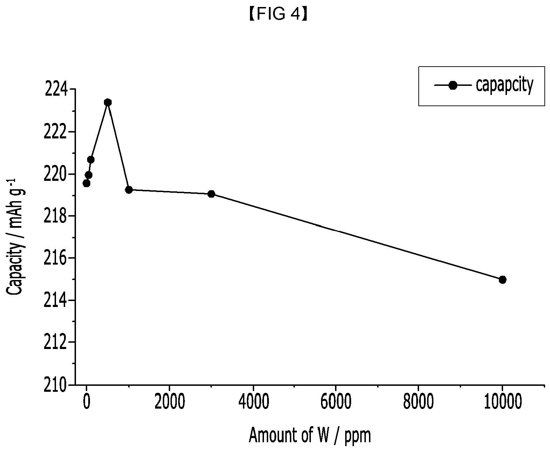

FIG 4 shows a change in discharge capacity according to W content in exemplary embodiment 1 and exemplary embodiment 2-1 to 2-6.

Referring to FIG 4, it can be seen that the capacity is the largest when W is 500 ppm.

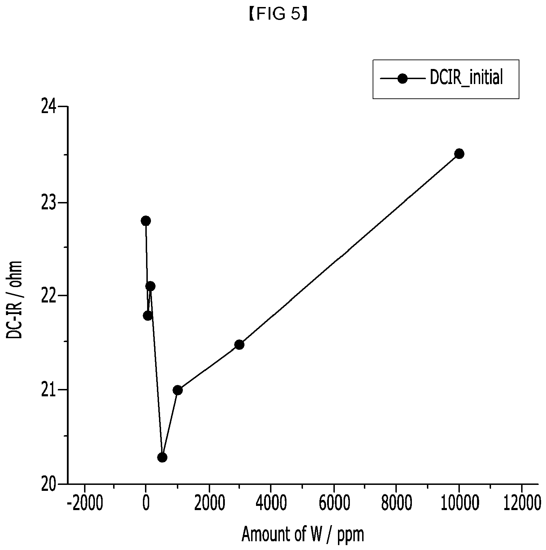

FIG. 5 shows the DC-IR change according to the W content of exemplary embodiment 1 and exemplary embodiment 2-1 to 2-6.

Referring to FIG 5, it can be confirmed that the initial resistance is the lowest optimal point when W is 500 ppm.

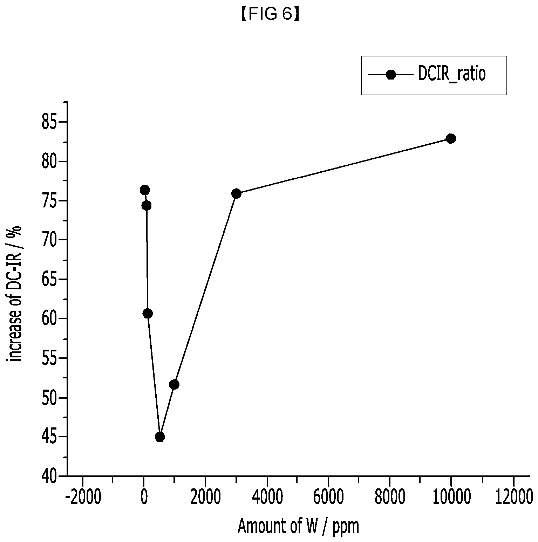

FIG. 6 shows a change in the DCIR increase rate according to the W content in exemplary embodiment 1 and exemplary embodiment 2-1 to 2-6.

Referring to FIG 6, it can be seen that the resistance increase rate is the smallest when W is 500 ppm.

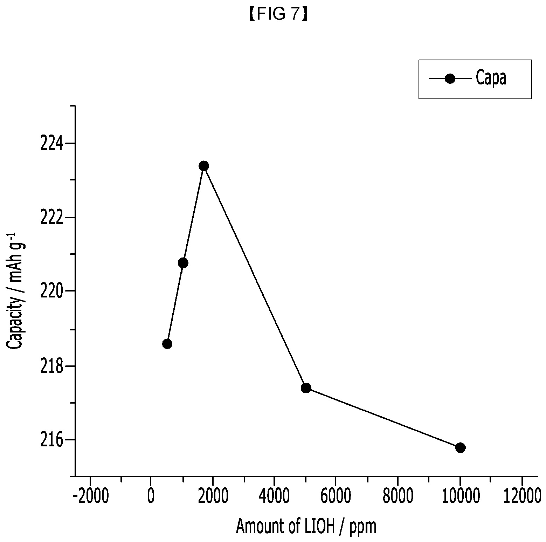

FIG 7 shows the initial discharge capacity according to the LiOH content of exemplary embodiment 1 and exemplary embodiment 4-1 to 4-4.

Referring to FIG 7, it can be seen that the discharge capacity is the highest when the content of LiOH is 1,700 ppm.

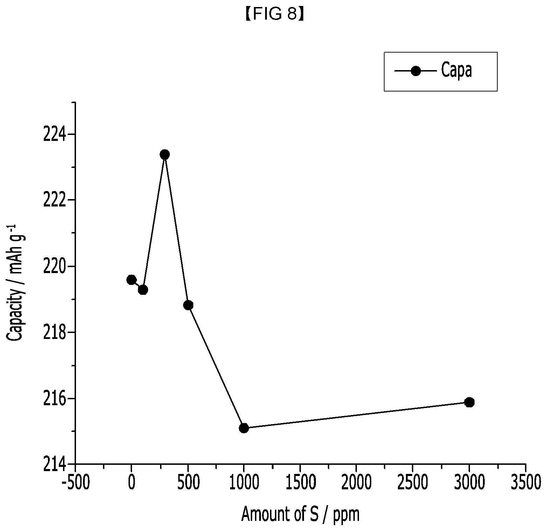

FIG 8 shows the change in discharge capacity according to the $Li_2SO_4$ content of exemplary embodiment 1 and exemplary embodiment 3-1 to 3-5.

Referring to FIG 8, it can be seen that the discharge capacity is the highest when the content of $Li_2SO_4$ is 300 ppm.

The present invention is not limited to the exemplary embodiment, but can be manufactured in a variety of different forms, and a person of an ordinary skill in the technical field to which the present invention belongs does not change the technical idea or essential features of the present invention. It will be understood that it can be implemented in other specific forms. Therefore, the exemplary embodiment described above should be understood as illustrative in all respects and not limiting.

**Claims**

1. A positive electrode active material for lithium secondary battery, comprising:

   a lithium metal oxide particle; and
   a coating layer positioned on at least part of the lithium metal oxide particle surface;
   wherein, the coating layer includes any one or more of group 5 elements and group 6 elements, B, LiOH, $Li_2CO_3$ and $Li_2SO_4$.

2. The positive electrode active material of claim 1, wherein:
   the positive electrode active material is in the form of a secondary particle including a plurality of primary particles, and one or more of the Group 5 and Group 6 elements is positioned on at least a portion of the primary particle surface.

3. The positive electrode active material of claim 1, wherein:
   the Group 5 element includes Nb.

4. The positive electrode active material of claim 1, wherein:
   the Group 6 elements include W.

5. The positive electrode active material of claim 1, wherein:
   a content of the group 5 element and group 6 element is 10ppm to 10,000ppm based on the total amount of the positive electrode active material.

6. The positive electrode active material of claim 1, wherein:
   a content of the LiOH is 100ppm to 10,000ppm based on the total amount of the positive electrode active material.

7. The positive electrode active material of claim 1, wherein:

a content of the $Li_2SO_4$ is 10ppm to 3,000ppm based on the total amount of the positive electrode active material.

8. The positive electrode active material of claim 1, wherein:
the $Li_2CO_3$ is not separately injected as a lithium raw material, but is caused by an internal reaction.

9. The positive electrode active material of claim 1, wherein:
the positive electrode active material has a peak around 192.1 eV and a peak around 195.0 eV, and a peak around 35.0 eV and a peak around 38.5 eV when analyzed by XPS.

10. The positive electrode active material of claim 2, wherein:
in the positive electrode active material, during EDS analysis, the ratio of a relative intensities of Ni and W present at the boundary of the primary particle satisfies the following equation 1.

[Equation 1]

$$0.1 \leq [I_{Ni}/I_W] \leq 2.0$$

(Here, $I_{Ni}$ means a relative intensity of Ni present at the boundary of the primary particle, and Iw means a relative intensity of W present at the boundary of the primary particle.)

11. The positive electrode active material of claim 1, wherein:
a content of nickel in the metal in the lithium metal oxide particle is 85 mol% or more.

12. A manufacturing method of positive electrode active material for lithium secondary battery, comprising:

Obtaining a metal precursor by injecting an aqueous metal salt solution into a co-precipitation reactor;
preparing a mixture by mixing the metal precursor, a lithium raw material and a doping raw material;
cooling after a first heat treatment of the mixture;
washing the product obtained in the cooling step with a material containing at least one of a group 5 element and a group 6 element; and
subjecting the product to a secondary heat treatment, after drying the washed product, and mixing it with a material for forming a coating layer,
wherein, the coating layer forming material includes a boron compound, LiOH and $Li_2SO_4$.

13. The method of claim 12, wherein:

in the step of washing,
a material containing the Group 5 element is a mixture of at least one of:

distilled water and at least one of alcohol; and
ammonium niobium oxalate, niobium oxide, niobium nitride, niobium boride, niobium pentaethoxide, niobium i-propoxide, niobium n-propoxide propoxide), niobium i-butoxide, niobium n-butoxide, niobium halide and niobium nitrate.

14. The method of claim 12, wherein:

in the step of washing,
a material containing the Group 6 element is a mixture of at least one of:

distilled water and at least one of alcohol; and
ammonium meta-tungstate (AMT), ammonium para-tungstate, tungsten oxide, tungsten halide, tungsten hexaethoxide, tungsten i-propoxide, tungsten boride, tungsten nitride, and tungsten carbonyl.

15. The method of claim 12, wherein:
the secondary heat treatment is performed in the 200 to 450°C temperature range.

16. A lithium secondary battery, comprising:

a positive electrode comprising the positive electrode active material of any one of claims 1 to 11;
a negative electrode; and
a non-aqueous electrolyte.

【FIG 1】

【FIG 2】

【FIG 3】

【FIG 4】

【FIG 5】

【FIG 6】

【FIG 7】

【FIG 8】

## INTERNATIONAL SEARCH REPORT

| International application No. |
|---|
| **PCT/KR2021/019443** |

| A. | CLASSIFICATION OF SUBJECT MATTER |
|---|---|

**H01M 4/36**(2006.01)i; **H01M 4/62**(2006.01)i; **H01M 4/525**(2010.01)i; **H01M 4/505**(2010.01)i; **C01G 53/00**(2006.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 4/36(2006.01); H01M 10/052(2010.01); H01M 4/04(2006.01); H01M 4/48(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 금속 산화물(lithium metal oxide), 코팅층(coating layer), 5족원소(group 5 element), 6족 원소(group 6 element), 양극 활물질(positive electrode active material), 리튬 이차 전지(lithium secondary battery)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0022313 A (ECOPRO BM CO., LTD.) 03 March 2020 (2020-03-03)<br>See claims 1 and 8-11; paragraphs [0070], [0074], [0107], [0133]-[0141] and [0193]-[0202]; and table 1. | 1-16 |
| Y | KR 10-2015-0090215 A (UMICORE et al.) 05 August 2015 (2015-08-05)<br>See claims 1-2 and 5; and paragraph [0142]. | 1-11,16 |
| Y | KR 10-2019-0079526 A (LG CHEM, LTD.) 05 July 2019 (2019-07-05)<br>See claims 1 and 7; and paragraph [0074]. | 5 |
| Y | KR 10-2005-0049746 A (KOREA ELECTRONICS TECHNOLOGY INSTITUTE) 27 May 2005 (2005-05-27)<br>See claims 5 and 9; and page 3. | 12-15 |
| Y | JP 2017-084513 A (SUMITOMO METAL MINING CO., LTD.) 18 May 2017 (2017-05-18)<br>See paragraphs [0097] and [0107]-[0112]. | 12-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 April 2022** | **04 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/019443**

| Patent document cited in search report | | | Publication date (day/month/year) | Patent family member(s) | | | Publication date (day/month/year) |
|---|---|---|---|---|---|---|---|
| KR | 10-2020-0022313 | A | 03 March 2020 | KR | 10-2020-0022320 | A | 03 March 2020 |
| | | | | KR | 10-2020-0022321 | A | 03 March 2020 |
| | | | | KR | 10-2020-0022328 | A | 03 March 2020 |
| | | | | KR | 10-2021-0075039 | A | 22 June 2021 |
| | | | | KR | 10-2225892 | B1 | 11 March 2021 |
| | | | | KR | 10-2262164 | B1 | 09 June 2021 |
| | | | | KR | 10-2265141 | B1 | 16 June 2021 |
| | | | | KR | 10-2323190 | B1 | 09 November 2021 |
| | | | | KR | 10-2327321 | B1 | 17 November 2021 |
| KR | 10-2015-0090215 | A | 05 August 2015 | CN | 104919631 | A | 16 September 2015 |
| | | | | CN | 104919631 | B | 02 August 2019 |
| | | | | EP | 2932546 | A1 | 21 October 2015 |
| | | | | EP | 2932546 | A4 | 21 December 2016 |
| | | | | JP | 2016-506596 | A | 03 March 2016 |
| | | | | JP | 6242401 | B2 | 06 December 2017 |
| | | | | KR | 10-1690898 | B1 | 28 December 2016 |
| | | | | TW | 201434752 | A | 16 September 2014 |
| | | | | TW | I513660 | B | 21 December 2015 |
| | | | | US | 2015-0380722 | A1 | 31 December 2015 |
| | | | | US | 9859550 | B2 | 02 January 2018 |
| | | | | WO | 2014-091331 | A1 | 19 June 2014 |
| KR | 10-2019-0079526 | A | 05 July 2019 | | None | | |
| KR | 10-2005-0049746 | A | 27 May 2005 | KR | 10-0565990 | B1 | 30 March 2006 |
| JP | 2017-084513 | A | 18 May 2017 | CN | 108352524 | A | 31 July 2018 |
| | | | | CN | 108352524 | B | 18 June 2021 |
| | | | | EP | 3370285 | A1 | 05 September 2018 |
| | | | | EP | 3370285 | A4 | 12 June 2019 |
| | | | | EP | 3370285 | B1 | 26 May 2021 |
| | | | | JP | 2018-084513 | A5 | 15 November 2018 |
| | | | | JP | 6753050 | B2 | 09 September 2020 |
| | | | | KR | 10-2018-0067558 | A | 20 June 2018 |
| | | | | US | 10950855 | B2 | 16 March 2021 |
| | | | | US | 2018-0337403 | A1 | 22 November 2018 |
| | | | | WO | 2017-073246 | A1 | 04 May 2017 |

Form PCT/ISA/210 (patent family annex) (July 2019)